# EUROPÄISCHE PATENTANMELDUNG

(11) **EP 0 852 330 A1**
(43) Veröffentlichungstag der Anmeldung: **08.07.1998**
(21) Anmeldenummer: 97120895.4
(22) Anmeldetag: 28.11.1997
(51) Int. Cl.: G01K 11/18, H05B 3/74

(54) **Verfahren und Vorrichtung zur betrieblichen Messung der Temperatur in mindestens einem Bereich eines Glas-/Glaskeramikkörpers, der betrieblich hohen Temperaturänderungen ausgesetzt ist**

(30) Priorität: 31.12.1996 DE 19654773
(71) Anmelder: Schott Glas, 55122 Mainz (DE)
(72) Erfinder: Köbrich, Holger, 65439 Flörsheim (DE)
(74) Vertreter: Fuchs Mehler Weiss

(57) **Zusammenfassung**

Wenn Bereiche eines Glas-/Glaskeramikkörpers betrieblich hohen Temperaturänderungen ausgesetzt sind, ist es notwendig, die Temperatur in diesen Bereichen zu kennen. So muß beispielsweise die Temperatur von Kochflächen eines Glaskeramikkochfeldes in der Kochzone während des Betriebes dauernd überwacht werden. Die Erfindung sieht ein Verfahren und eine entsprechende Vorrichtung vor, durch die mittels einer optischen Methode die wirkliche Temperatur in den betroffenen Bereichen, z.B. der Kochzone gemessen werden kann. Die Erfindung nutzt den Effekt aus, daß eine Erhöhung der Temperatur in dem betroffenen Bereich zu einer Verringerung der Transmission des Glas-/Glaskeramikmaterials in einem bestimmten Wellenlängenbereich des Lichts führt. Mittels eines Lichtstrahles in diesem bestimmten Wellenlängenbereich wird der Glas-/Glaskeramikkörper in dem Bereich, z.B. der Kochzone durchstrahlt und die sich dabei ergebende Transmission in einen entsprechenden Photostrom abgebildet. Aus diesem wird über den zuvor empirisch ermittelten Zusammenhang zwischen Transmission und Temperatur die Temperatur in dem Bereich bestimmt.

## Beschreibung

Die Erfindung betrifft ein Verfahren zur betrieblichen Messung der Temperatur in mindestens einer Kochzone eines Kochfeldes mit einer Glaskeramikplatte. Die Erfindung bezieht sich weiterhin auf ein Kochfeld mit einer entsprechenden Vorrichtung.

Wenn Bereiche einer Glaskeramikplatte betrieblich hohen Temperaturänderungen ausgesetzt sind, ist es aus den verschiedensten Gründen notwendig, die Temperatur in diesen Bereichen zu kennen. So muß typischerweise bei Kochfeldern mit Glaskeramikplatten als Kochflächen die Temperatur in der Kochzone während des Betriebes dauernd überwacht werden. Bei Überschreitung der Temperatur/Zeit-Belastbarkeit der Glaskeramikplatte kann diese brechen. Weiterhin muß für die Regelung der Leistung der Kochzone die Temperatur erfaßt werden.

Üblicherweise wird die Temperatur der Glaskeramikplatte in der Kochzone, mit einem Stabausdehnungsregler kontrolliert. Eine derartige Anordnung ist beispielsweise durch die EP 0 394 693 bekanntgeworden. Der zugehörige Dehnstab-Temperaturfühler ist in einigen Millimetern Abstand von der Unterseite der Glas-/Glaskeramikplatte angebracht und erfaßt damit nicht direkt die am Meßort (Kochzone) herrschende Temperatur.

Hierdurch reagiert er auf Änderungen der Temperatur nur verzögert und in vielen Fällen fehlerhaft.

Es gibt auch Vorschläge, die Infrarotstrahlung der Unterseite der heißen Glaskeramikplatte zur Bestimmung der Temperatur zu benutzen. Die Umsetzung scheitert im Anwendungsbeispiel daran, daß die Wendel des die Kochzone aufheizenden Heizkörpers bei derselben Wellenlänge strahlt und das Nutzsignal verfälscht.

Der Erfindung liegt die Aufgabe zugrunde, das eingangs bezeichnete Verfahren so zu führen bzw. die entsprechende Vorrichtung so auszubilden, daß mit einfachen Mitteln die wirkliche Temperatur der Glaskeramikplatte in den betroffenen Kochzonen erfaßbar ist.

Die Lösung dieser Aufgabe gelingt erfindungsgemäß für das Verfahren auf der Basis eines empirisch aufgenommenen Zusammenhanges zwischen der Transmission von Licht durch die Glaskeramikplatte in einem für das jeweilige Glaskeramikmaterial typischen Wellenlängenbereich von der Temperatur mit den Schritten:
- Durchstrahlen der Glaskeramikplatte in der Kochzone von innen nach außen mit Licht im Wellenlängenbereich von 700 - 1500 nm mit Reflexion des Lichtes an der Außenfläche der Glaskeramikplatte und einem zweiten Durchgang durch die Glaskeramikplatte.
- Erfassen des reflektierten Lichtes mit einem Photoelement unter Erzeugung eines der Transmission der Glaskeramikplatte in der Kochzone entsprechenden Photostromes, und
- Bestimmen der Temperatur der Kochzone aus dem aufgenommenen Zusammenhang zwischen Transmission des Lichtes der vorgegebenen Wellenlänge und der Temperatur der Glaskeramikplatte.

Hinsichtlich des eingangs bezeichneten Kochfeldes mit der zugehörigen Vorrichtung gelingt die Lösung dieser Aufgabe erfindungsgemäß auf der Basis eines empirisch aufgenommenen Zusammenhanges zwischen der Transmission von Licht durch die Glaskeramikplatte in einem für das jeweilige Plattenmaterial typischen Wellenlängenbereich von der Temperatur mit
- einer unterhalb der Glaskeramikplatte angeordneten Lichtquelle, die Licht mit einer Wellenlänge im Bereich von 700 - 1500 nm emittiert,
- optischen Elementen zum Durchstrahlen der Glaskeramikplatte in der Kochzone von innen nach außen mit dem emittierten Licht,
- einem Reflektor an der Außenfläche der Platte in der Kochzone zur Reflexion des Lichtes für einen zweiten Durchgang durch die Platte.
- einer Photoelementanordnung und vorgeschalteten optischen Elementen zum Erfassen des reflektierten Lichtes, die einen der Transmission der Glaskeramikplatte in der Kochzone entsprechenden Photostrom erzeugt, und
- einer Auswertestufe für den Photostrom zum Bestimmen der Temperatur der Kochzone aus dem aufgenommenen Zusammenhang zwischen der Transmission des Lichtes der vorgegebenen Wellenlänge und der Temperatur der Glaskeramikplatte.

Die Erfindung nutzt den Effekt aus, daß eine Erhöhung der Temperatur in der Kochzone zu einer Verringerung der Transmission des Glaskeramikmaterials in einem bestimmten Wellenlängenbereich führt. Die Transmission wird dabei in einen entsprechenden Photostrom abgebildet, aus dem über den zuvor ermittelten Zusammenhang zwischen Transmission und Temperatur diese bestimmbar ist.

Mit dem erfindungsgemäßen Verfahren sowie mit der entsprechenden Vorrichtung wird die wirkliche Temperatur der Glaskeramikplatte in der betroffenen Kochzone gemessen. Hierdurch wird einerseits eine Überhitzung sicher verhindert, andererseits kann die Belastbarkeit der Glaskeramikplatte voll ausgenutzt werden und das Kochgut schneller aufgeheizt werden.

Nach einem ausgestaltenden Merkmal der Erfindung wird das ausgestrahlte Licht mittels an sich bekannter Einrichtungen getaktet und die Temperaturbestimmung durch Auswertung des getakteten reflektierten Lichtes vorgenommen.

Dadurch ist mit großem Vorteil eine Trennung des Nutzsignals von der Störstrahlung wie der Strahlung des Heizkörpers oder der Oberfläche der heißen Glaskeramikplatte erreichbar.

Durch eine entsprechende Anordnung von optischen Elementen, wie Lichtleiter oder Spiegel, bzw. Photoelementen, kann die Temperatur in der betroffenen Kochzone lokal oder flächig erfaßt werden. Die flächige Erfassung führt zu einem Temperaturmittelwert in dem betroffenen Bereich, wogegen im Fall einer lokalen Temperaturerfassung die "hot spots" besser erfaßbar sind.

Als Lichtquelle findet vorzugsweise eine Lumineszenzdiode Anwendung, die Licht in einem verhältnismäßig definierten Spektralbereich ausstrahlt und die auf einfache Weise elektronisch taktbar ist. Grundsätzlich können auch Glühlampen verwendet werden. Als Photoelement finden vorzugsweise ein Phototransistor oder eine Photodiode Anwendung, die für eine genaue Umsetzung der Transmission in einen entsprechenden Photostrom sorgen.

Durch die DE 31 17 205 A1 ist eine optoelektronische Kochzonensteuerung bei einer Glaskeramikplatte als Kochfläche bekannt geworden, mit einem Lichtsender und einem Lichtempfänger, die unterhalb der Glaskeramikplatte derart angeordnet sind, daß sie die Größe, d.h. den Durchmesser des auf die Kochzone gestellten Kochgerätes erkennen. Sie sind derart mit einer Heizkreissteuerung für die Kochzone verschaltet, daß je nach Durchmesser des Kochgerätes mehr oder weniger Heizkreise einschaltbar sind.

Es handelt sich somit um ein Topferkennungssystem mit einer Heizkreissteuerung für die entsprechend zu erwärmende Fläche.

Mit der bekannten Anordnung wird jedoch nicht die Temperatur in der Kochzone erfaßt. Für diesen Zweck sind gesonderte, vorzugsweise die eingangs beschriebenen Temperaturfühler vorgesehen.

Es ist auch bekannt ("Optical Method of Measuring Temperature in Hot Glass" aus Journal of The American Ceramic Society, Vol. 55 Nr. 2. Seite 71 - 73), die Temperatur in einer Glasschmelze, die in der Größenordnung von 1.000° C (1.300° C) liegt, in der Weise zu bestimmen, daß man die Glasschmelze mit einem Laserlicht durchstrahlt und die temperaturabhängige Änderung des monochromatischen Absorptions-Koeffizienten bestimmt. Dieses Verfahren wird jedoch nur für Hochtemperatur-Glas beschrieben.

Durch die EP 0 111 853 ist auch eine indirekte Temperaturmessung bekannt geworden, bei der die temperaturabhängige Lichtabsorption in einem speziellen Halbleitermaterial, das den Detector bildet, bestimmt wird, wozu der Detector in innigem Wärmekontakt mit dem Körper gebracht werden muß, dessen Temperatur zu messen ist. Im Fall der Erfindung liegt dagegen eine direkte Messung vor, da eine Kochzone in der Glaskeramikplatte, deren Temperatur zu bestimmen ist, unmittelbar mit dem "Meßlicht" durchstrahlt wird.

Weitere ausgestaltende Merkmale und Vorteile der Erfindung ergeben sich anhand von in den Zeichnungen dargestellten Ausführungsbeispielen der Erfindung. Als Anwendungsbeispiel wurde typischerweise ein Kochfeld mit einer Glaskeramikplatte als Kochfläche, die mindestens eine beheizte Kochzone aufweist, gewählt.

Es zeigen:
- Fig. 1: in Draufsicht eine schematische Darstellung eines üblichen Kochfeldes mit seinen Kochzonen,
- Fig. 2: in einer schematischen Darstellung ein erstes Ausführungsbeispiel einer Vorrichtung zur betrieblichen Erfassung der Temperatur in mindestens einer dieser Kochzonen mit Führung der Lichtwege nach dem Autokollimationsprinzip,
- Fig. 3: in einer schematischen Darstellung ein zweites Ausführungsbeispiel einer entsprechenden Vorrichtung mit getrennten Lichtwegen, und
- Fig. 4: den empirisch aufgenommenen Zusmamenhang zwischen der Transmission des Lichtes durch bestimmte Glaskeramik-Materialien, der Wellenlänge und der Temperatur.

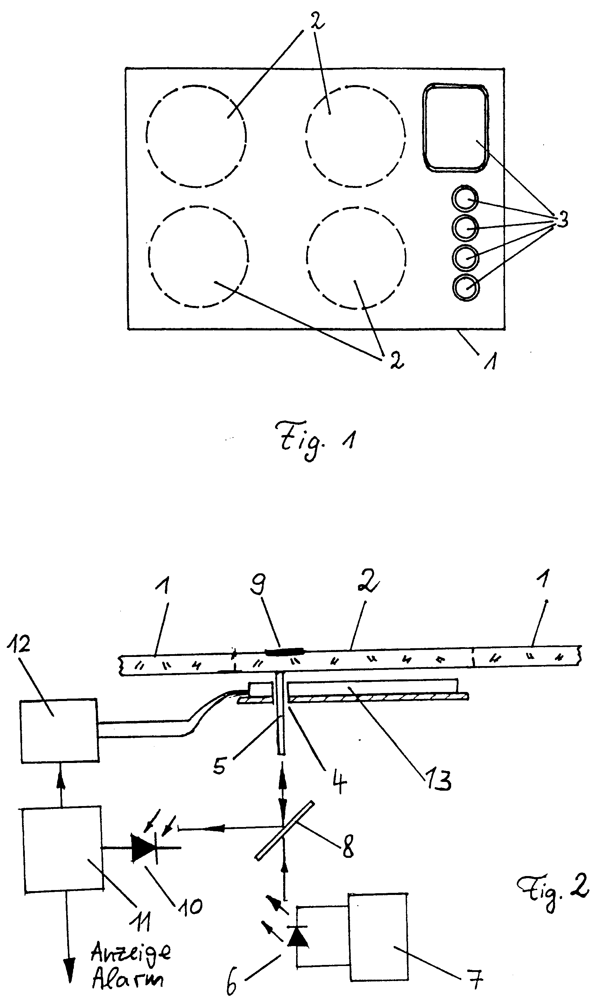

Die Figur 1 zeigt in schematischer Darstellung in Draufsicht ein Kochfeld mit einer Kochfläche 1 aus Glaskeramikmaterial, das unter der Marke CERAN® vertrieben wird, die vier Kochzonen 2 aufweist. Die Zahl der Kochzonen ist nur beispielhaft. Die Kochfläche kann jede übliche Zahl von Kochzonen der üblichen Ausbildung aufweisen.

Auch der angegebene Werkstoff entspricht einer bevorzugten Ausbildung. Es können auch andere Glas-Materialien, die sich für die Ausbildung als Kochfläche eignen, verwendet werden.

Auf der rechten Seite der Kochfläche 1 befinden sich Beispiele für eingelassene Funktionszonen 3. Die räumliche Lage der Funktionszonen 3 ist in der Ausführung nach Figur 1 nur beispielhaft. Sie können auch in einem Funktionsbereich konzentriert angeordnet sein. Sie können aber auch über die gesamte Kochfläche verteilt angeordnet werden.

Den Funktionszonen 3 ist jeweils ein nicht dargestelltes Funktionselement, wie Schalter oder dergleichen, im Kochfeld 1 zugeordnet. Dieser Aufbau ist bekannt und braucht daher hier nicht näher erläutert zu werden.

Die Figur 2 zeigt in einer schematischen Seitenansicht eine dieser Kochzonen 2 des Kochfeldes nach Fig. 1 im größeren Maßstab mit einem Ausführungsbeispiel einer Vorrichtung zur betrieblichen Erfassung der Temperatur in mindestens einer der Kochzonen, vorzugsweise in allen Kochzonen, zumindest hinsichtlich der Überwachung der Temperatur. Für Kochzonen mit einer Regelung der Leistung wird das Temperaturausgangssignal der Vorrichtung zusätzlich in den Regelkreis eingespeist.

Unterhalb der Kochzone 2 der Glaskeramikplatte 1 ist ein Heizelement 13 angeordnet, dessen Leistung in diesem Ausführungsbeispiel regelbar sein soll. Im Boden des Heizkörpers 13 befindet sich eine Öffnung 4, durch die ein Lichtleiter 5 hindurchgeführt ist. Unterhalb der Glaskeramikplatte 1 befindet sich weiterhin eine Lichtquelle, in diesem Beispiel in Form einer Lumineszenzdiode 6, die im gewählten Beispiel Licht mit einer gut definierten Wellenlänge mit einer Halbwertsbreite von 50nm emittiert. Durch die Art der Lumineszenzdiode kann die Wellenlänge der maximalen Emission im Bereich von 700-1500 nm gewährt werden. In diesem Wellenlängenbereich ist eine besonders ausgeprägte Abhängigkeit der Transmission der verwendeten Glaskeramikplatte von ihrer Temperatur gegeben.

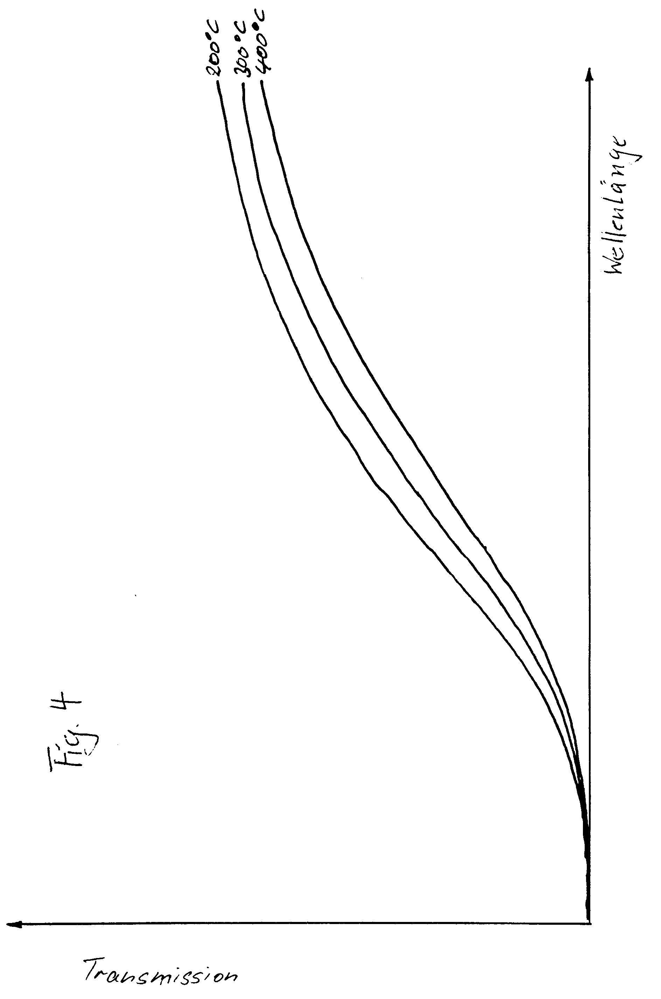

Dieser Zusammenhang zwischen der Transmission des durch ein bestimmtes Glaskeramik-Material hindurchgehenden Lichtes, seiner Wellenlänge und der Temperatur des Glaskeramik-Materials ist in der Fig. 4 dargestellt. Diese Figur zeigt eine empirisch aufgenommene Kurvenschar, die die Abhängigkeit der Transmission für drei unterschiedliche Temperaturen (200°C, 300°C und 400°C) von der Wellenlänge dokumentieren. Diese Abhängigkeit ist die Basis für die erfindungsgemäße Temperaturmessung, wobei für jedes Material eine eigene Kurve aufzunehmen ist.

Anstelle der Lumineszenzdiode können auch andere Lichtquellen, die Licht in dem angegebenen Wellenlängenbereich ausstrahlen, z.B. Glühbirnen, verwendet werden. Für andere Glaskeramikmaterialien sind Leuchtdioden im entsprechenden Wellenlängenbereich zu verwenden.

Die Lumineszenzdiode 6 ist an einen elektronischen Schaltkreis 7 angeschlossen, der die Diode versorgt und mit dem zugleich mit bekannten Mitteln das von der Diode emittierte Licht getaktet werden kann.

In dem bevorzugten Ausführungsbeispiel wird das von der Lumineszenzdiode 6 emittierte Licht über einen teildurchlässigen Spiegel 8 auf den Lichtleiter 5 geführt, durchstrahlt dann die Glaskeramikplatte 1 in der Kochzone 2 von unten nach oben und wird an einem an der Außenfläche der Glaskeramikplatte 1 angebrachten Reflektor 9 in sich zurückreflektiert und durchläuft dabei zum zweiten Mal die Glaskeramikplatte 1. Der Reflektor kann durch eine lokal aufgebrachte metallische Reflexionsschicht oder durch ein Dekorelement gebildet werden.

Das reflektierte Licht gelangt dann über den teildurchlässigen Spiegel 8 zu einem Photoelement 10, das in diesem Beispiel durch eine Photodiode realisiert ist. Es können aber auch die anderen bekannten lichtempfindlichen Empfänger wie Phototransistoren oder dergl. Anwendung finden.

Das Photoelement 10 erzeugt einen der in Fig. 4 dargestellten temperaturabhängigen Transmission der Glaskeramikplatte 1 weitgehend proportionalen Photostrom. Dieser Photostrom wird einer Auswertestufe 11 zugeführt, in der in Verbindung mit dem vorgegebenen in der Auswertestufe abgelegten Zusammenhang zwischen der Transmission des Lichtes, der Wellenlänge und der Temperatur der Glaskeramikplatte 1 nach Fig. 4 die Temperatur der Kochzone berechnet wird.

Die Auswertestufe ist dabei so ausgebildet, daß sie den Photostrom im Takt des emittierten Lichtes und in der Taktpause auswertet und aus der Differenz das Nutzsignal herausfiltert.

Die Auswertestufe 11 ist daher prinzipiell eine Rechenschaltung, die insbesondere durch einen Mikroprozessor realisiert wird.

Der ermittelte Temperaturwert kann, wie durch den unteren Pfeil an der Stufe 11 angedeutet, mit bekannten Mitteln zur Anzeige gebracht werden und/oder einer Alarmeinrichtung (nicht dargestellt) zugeführt werden, die bei Überschreiten eines Temperaturgrenzwertes Alarm gibt. Das Temperaturmeßsignal kann darüber hinaus einer Stufe 12 zugeführt werden, mittels der die Heizleistung abschaltbar und regelbar ist. Eine Abschaltung erfolgt beispielsweise, wenn das Temperatursignal einen Grenzwert überschreitet, wogegen im Fall der Regelung das Temperatursignal als IST-Wert für die Leistungsregelung dient. Eine derartige Anordnung unter Verwendung des Temperatursignals zur Steuerung/Regelung der Temperatur der Glaskeramik-Kochzone und zum Schutz der Überhitzung der Kochzonen ist durch die DE 40 22 845 C2 und die DE 40 22 846 C2 bekanntgeworden.

Weitere Anwendungsmöglichkeiten für das Temperatursignal werden später dargestellt.

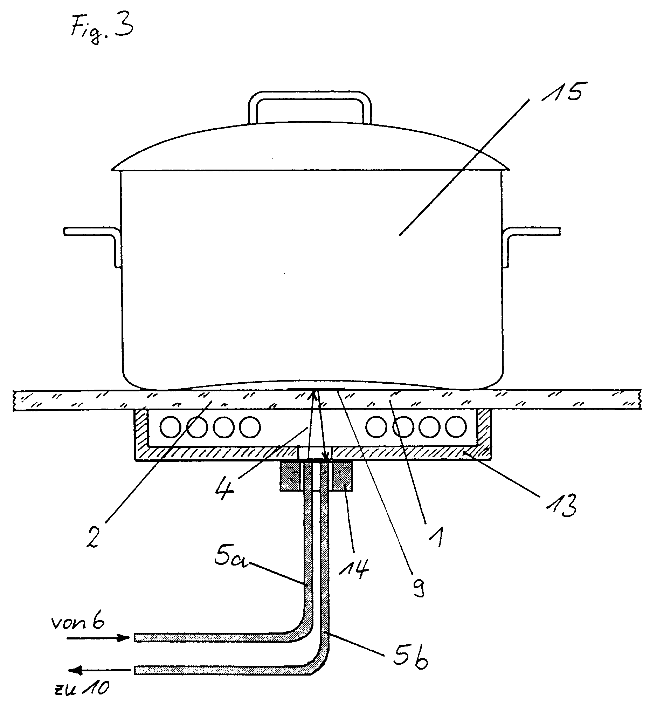

In dem dargestellten Ausführungsbeispiel wird das Licht in sich zurückreflektiert (Autokollimationsprinzip). Die Vorrichtung kann jedoch auch so ausgebildet sein, daß für das durchstrahlte Licht und das reflektierte Licht zwei verschiedene optische Wege und zugehörige Lichtleiter vorgesehen sind. Eine derartige Ausführung ist in der Fig. 3 dargestellt. Übereinstimmende Elemente sind mit denselben Bezugszeichen versehen. Die Figur 3 zeigt zwei Lichtleiter, einen Lichtleiter 5a für das von der Lumineszenzdiode 6 ausgehende Licht, das durch die Öffnung 4 in dem Heizelement 13 und durch die Glaskeramikplatte 1 hindurchtritt, um dann am Reflektor 9 unter einem bestimmten Winkel zurückgeworfen zu werden, und einen zweiten Lichtleiter 5b für das reflektierte Licht, das auf das Photoelement 10 geführt wird. Beide Lichtleiter 5a und 5b sind in einer manschettenartigen Halterung 14 an der Unterseite des Heizelementes 13 mechanisch angebracht. Zum Zwecke einer realistischen Darstellung ist dabei auch ein Topf 15 in der Kochzone 2 gezeigt.

Anstelle der Lichtleiter in den Fig. 2 und 3 können auch optische Anordnungen mit Spiegeln und fokussierenden Bausteinen verwendet werden.

In der Ausführung nach Fig. 2 und Fig. 3 sind die optischen Elemente so ausgebildet und ist die Photoelementanordnung so getroffen, daß die Temperatur der Kochzone 2 in einem begrenzten lokalen Bereich erfaßbar ist.

Es ist auch möglich, daß die optischen Elemente so ausgebildet sind und die Photoelementanordnung so getroffen ist, daß die Temperatur der Kochzone flächig erfaßbar ist.

Diese Ausführungsform ist realisierbar, indem die Photoelementanordnung mehrere Photoelemente aufweist, die jeweils einem bestimmten lokalen Bereich der Kochzone zugeordnet sind und die Temperatur der Kochzone durch eine vergleichende Bewertung der einzelnen Photoströme in der Auswertestufe bestimmbar ist. Mittels dieser Bewertung ist auch ein Tempeaturprofil darstellbar, um anomale thermische Belastungszustände in der Kochzone erkennen und Maßnahmen entsprechend der DE 40 22 844 C1 ergreifen zu können.

Eine weitere Ausführungsform ist denkbar, bei der die Photoelementanordnung ein einziges Photoelement aufweist, dem als optische Elemente mehrere Lichtleiter zugeordnet sind, die auf unterschiedliche lokale Bereiche der Kochzone gerichtet sind. Durch die Zwischenschaltung eines elektronischen Multiplexers kann auch bei dieser Ausführungsform ein Temperaturprofil aufgenommen werden.

Die flächige Temperaturerfassung ist auch mit einer Vorrichtung möglich, bei der die Photoelementanordnung ein einziges Photoelement aufweist und als optisches Element ein beweglicher Spiegel vorgesehen ist, der das emittierte Licht auf unterschiedliche lokale Bereiche der Kochzone lenkt und das jeweils reflektierte Licht auf den Photoempfänger führt.

Aufgrund der verhältnismäßig rauhen Umgebungsbedingungen und im Hinblick auf eine geringe Störanfälligkeit wird jedoch den Ausführungsformen mit den ruhenden optischen Elementen der Vorzug gegeben.

In den Figuren 2 und 3 ist jeweils eine Reflektorschicht 9 dargestellt, an der das durch die Glaskeramikplatte 1 hindurchgetretene Licht reflektiert wird. Prinzipiell ist es denkbar, insoweit auch die Eigenreflexion an der Oberseite der Glaskeramikplatte 1 auszunutzen. Unter Verwendung einer Reflektorschicht ist jedoch das Signal ausgeprägter.

Im Extremfall kann eine sehr hohe Temperaturbelastung auftreten, sodaß eine Bruchgefahr für die Glaskeramikplatte besteht. Im Verlauf dieses Prozesses verringert sich die Transmission des Glaskeramikmaterials. Es besteht daher die Möglichkeit zur Auswertung des Temperatursignals in der Stufe 11, nämlich in einer weiteren Stufe nach Art eines Dosimeters die Minimal- und Maximalwerte der Transmission zu speichern, und die Daten als ein Maß für die Alterung der Glaskeramikplatte zu verwenden.

Auch ist es denkbar, das Temperatursignal in der Weise auszuwerten, daß eine Anzeige möglich ist, ob ein Topf auf der Kochzone 2 der Glaskeramikplatte 1 steht oder nicht, weil bei gleicher Heizleistung die Temperatur der Kochzone unterschiedlich ist.

Ferner ist es möglich, das Temperatursignal einer Anzeigeeinrichtung entsprechend der DE 43 17 040 A1 zuzuführen, welche dem Benutzer die in der jeweiligen Kochzone verfügbare Wärmeleistung quantitativ anzeigt.

Das Heizelement 13 ist vorzugsweise ein mit elektrischer Energie aufheizbares Element. Es kann jedoch auch ein Element in einem gasbeheizten System oder ein induktiv heizendes Element sein.

## Patentansprüche

1. Verfahren zur betrieblichen Messung der Temperatur in mindestens einer Kochzone eines Kochfeldes mit einer Glaskeramikplatte auf der Basis eines impirisch aufgenommenen Zusammenhanges zwischen der Transmission von Licht durch die Glaskeramikplatte in einem für das jeweilige Glaskeramikmaterial typischen Wellenlängenbereich von der Temperatur, mit den Schritten:
- Durchstrahlen der Glaskeramikplatte in der Kochzone von innen nach außen mit Licht im Wellenlängenbereich von 700 - 1500 nm mit Reflexion des Lichtes an der Außenfläche der Glaskeramikplatte und einem zweiten Durchgang durch die Glaskeramikplatte,
- Erfassen des reflektierten Lichtes mit einem Photoelement unter Erzeugung eines der Transmission der Glaskeramikplatte in der Kochzone entsprechenden Photostromes, und
- Bestimmen der Temperatur der Kochzone aus dem aufgenommenen Zusammenhang zwischen Transmission des Lichtes der vorgegebenen Wellenlänge und der Temperatur der Glaskeramikplatte.

2. Verfahren nach Anspruch 1, dadurch gekennzeichnet daß das ausgestrahlte Licht getaktet wird und die Temperaturbestimmung durch Auswertung des getakteten, durch die Glaskeramikplatte hindurchgetretenen Lichtes erfolgt.

3. Verfahren nach Anspruch 1 oder 2, dadurch gekennzeichnet daß die Temperatur in der Kochzone lokal erfaßt wird.

4. Verfahren nach Anspruch 1 oder 2, dadurch gekennzeichnet, daß die Temperatur in der Kochzone flächig erfaßt wird.

5. Kochfeld mit einer Glaskeramikplatte (1) und einer Vorrichtung zur betrieblichen Messung der Temperatur in mindestens einer Kochzone eines Kochfeldes mit einer Glaskeramikplatte, auf der Basis eines empirisch aufgenommenen Zusammenhanges zwischen der Transmission von Licht durch die Glaskeramikplatte (1) in einem für das jeweilige Plattenmaterial typischen Wellenlängenbereich von der Temperatur, mit
- einer unterhalb der Glaskeramikplatte (1) angeordneten Lichtquelle (6), die Licht mit einer Wellenlänge im Bereich von 700 - 1500 nm emittiert,
- optischen Elementen (5, 8) zum Durchstrahlen der Glaskeramikplatte (1) in der Kochzone (2) von innen nach außen mit dem emittierten Licht,
- einem Reflektor (9) an der Außenfläche der Platte (1) in der Kochzone (2) zur Reflexion des Lichtes für einen zweiten Durchgang durch die Platte,
- einer Photoelementanordnung (10) und vorgeschalteten optischen Elementen (5, 8) zum Erfassen des reflektierten Lichtes, die einen der Transmission der Glaskeramikplatte (1) in der Kochzone (2) entsprechenden Photostrom erzeugt, und
- einer Auswertestufe (11) für den Photostrom zum Bestimmen der Temperatur der Kochzone (2) aus dem aufgenommenen Zusammenhang zwischen der Transmission des Lichtes der vorgegebenen Wellenlänge und der Temperatur der Glaskeramikplatte (1).

6. Kochfeld nach Anspruch 5, dadurch gekennzeichnet, daß die Lichtquelle (6) eine Lumineszenzdiode ist.

7. Kochfeld nach Anspruch 5 oder 6, dadurch gekennzeichnet, daß eine Einrichtung (7) zum Takten des emittierten Lichtes vorgesehen ist.

8. Kochfeld nach mindestens einem der Ansprüche 5 bis 7, dadurch gekennzeichnet, daß das Photoelement (10) der Anordnung ein Phototransistor oder eine Photodiode ist.

9. Kochfeld nach mindestens einem der Ansprüche 5 bis 8, dadurch gekennzeichnet, daß als optische Elemente (5, 8) Lichtleiter und/oder Spiegel vorgesehen sind.

10. Kochfeld nach einem der Ansprüche 5 bis 9, dadurch gekennzeichnet, daß die optischen Elemente (5, 8) so ausgebildet sind und die Photoelementanordnung (10) so getroffen ist, daß die Temperatur der Kochzone in einem begrenzten lokalen Bereich erfaßbar ist.

11. Kochfeld nach einem der Ansprüche 5 bis 9, dadurch gekennzeichnet, daß die optischen Elemente (5, 8) so ausgebildet sind und die Photoelementanordnung (10) so getroffen ist, daß die Temperatur der Kochzone flächig erfaßbar ist.

12. Kochzone nach Anspruch 11, dadurch gekennzeichnet, daß die Photoelementanordnung (10) mehrere Photoelemente aufweist, die jeweils einem bestimmten lokalen Bereich der Kochzone zugeordnet sind und die Temperatur der Kochzone durch eine vergleichende Bewertung der einzelnen Photoströme in der Auswertestufe (11) bestimmbar ist.

13. Kochzone nach Anspruch 11, dadurch gekennzeichnet, daß die Photoelementanordnung ein einziges Photoelement (10) aufweist, dem als optische Elemente mehrere Lichtleiter zugeordnet sind, die auf unterschiedliche lokale Bereiche der Kochzone gerichtet sind.

14. Kochzone nach einem der Ansprüche 7 bis 13, dadurch gekennzeichnet, daß die Auswertestufe (11) so ausgebildet ist, daß sie den Photostrom im Takt und in der Taktpause auswertet und aus der Differenz das Nutzsignal herausfiltert.

15. Kochzone nach einem der Ansprüche 5 bis 14, dadurch gekennzeichnet, daß zum Durchstrahlen des emittierten Lichtes und zum Erfassen des reflektierten Lichtes die gleichen optischen Elemente (5, 8) vorgesehen sind (Fig. 2).

16. Kochzone nach einem der Ansprüche 5 bis 14, dadurch gekennzeichnet, daß zum Durchstrahlen des emittierten Lichtes und zum Erfassen des reflektierten Lichtes unterschiedliche Lichtwege bildende optische Elemente (5 a, 5 b) vorgesehen sind (Fig. 3).

17. Kochzone nach einem der Ansprüche 5 bis 16, dadurch gekennzeichnet, daß als Reflektor anstelle eines gesonderten Bauteils die Eigenreflexion der Glaskeramikoberfläche dient.

18. Kochzone nach einem der Ansprüche 5 bis 16, dadurch gekennzeichnet, daß der Reflektor (9) durch ein Dekorelement auf der Oberseite der Glaskeramikplatte gebildet ist.

19. Kochzone nach einem der Ansprüche 5 bis 16, dadurch gekennzeichnet, daß das in der Auswertestufe (11) gewonnene Signal für die ermittelte Temperatur einer Anzeige- und/oder Alarmeinrichtung und/oder als IST-Wertsignal einer Regelstufe für ein die Kochzone (2) beheizendes Heizelement (13) zugeführt ist.
